# EUROPÄISCHE PATENTSCHRIFT

(11) **EP 3 670 629 B1**
(45) Veröffentlichungstag und Bekanntmachung des Hinweises auf die Patenterteilung: **24.06.2026**
(21) Anmeldenummer: 19213822.0
(22) Anmeldetag: 05.12.2019
(51) Int. Cl.: C09K 5/16, B01J 2/00

(54) **BESCHICHTUNG ZUR STABILISIERUNG VON THERMOCHEMISCHEN ENERGIESPEICHERMATERIALIEN**
COATING FOR STABILIZING THERMOCHEMICAL ENERGY STORAGE MATERIALS
REVÊTEMENT DE STABILISATION DES MATÉRIAUX THERMOCHIMIQUES D'ACCUMULATION D'ÉNERGIE

(30) Priorität: 07.12.2018 DE 102018131408
(43) Veröffentlichungstag der Anmeldung: 24.06.2020
(73) Patentinhaber: Deutsches Zentrum für Luft- und Raumfahrt e.V., 51147 Köln (DE); Rheinkalk GmbH, 42489 Wülfrath (DE); Helmut-Schmidt-Universität/ Universität der Bundeswehr Hamburg, 22043 Hamburg (DE)
(72) Erfinder: Gollsch, Marie, 71665 Vaihingen/Enz (DE); Linder, Marc, 70199 Stuttgart (DE); Schmidt, Matthias, 50825 Köln (DE); Afflerbach, Sandra, 57334 Bad Laasphe (DE); Holthaus, Philipp, 57078 Siegen (DE); Pickbrenner, Arnd, 42489 Wülfrath (DE); Pust, Christopher, 42489 Wülfrath (DE); Afflerbach, Klaus, 57078 Siegen (DE); Walter, Diethelm, 42489 Wülfrath (DE)
(74) Vertreter: dompatent

(56) Entgegenhaltungen:
- EP-A1- 2 938 696
- DE-A1- 102016 014 879
- DE-B4- 102012 103 427
- US-B2- 9 845 974

## Beschreibung

Die vorliegende Erfindung betrifft ein Verfahren zur Herstellung eines Materials zur thermochemischen Energiespeicherung sowie das erfindungsgemäß hergestellte Material.

Thermochemische Energiespeicher sind bereits seit längerem bekannt. So beschreibt beispielsweise DE 10 2009 052 304 A1 eine Vielzahl unterschiedlicher reaktiver Speichermaterialien, die als thermochemische Speichermaterialien eingesetzt werden können.

Bei der thermochemischen Energiespeicherung wird die Reaktionswärme einer chemischen Umsetzung gespeichert. Wesentlich ist, dass die entsprechende Reaktion vollständig reversibel abläuft und eine hohe Zyklenzahl ohne stärkere Einbußen bezüglich der Speicherkapazität realisiert werden kann.

Die bekannten Speichermaterialien liegen üblicherweise in Pulverform vor. Entsprechende pulverförmige Ausgangsstoffe haben jedoch den Nachteil, dass sie nur eingeschränkt fließfähig sind. Um eine verbesserte Fließfähigkeit entsprechender pulverförmiger Materialien zu erreichen sind Beschichtungen mit Nanopartikeln im Stand der Technik vorgeschlagen, beispielsweise in
DE 10 2012 103 427 B4. Hier wird das pulverförmige Ausgangsmaterial, also Pulver mit einer Partikelgröße von 5 µm, mit Nanopartikeln gemischt. Die Beschichtung dieser Einzelpartikel mit Nanopartikeln dient der Verbesserung der Schüttungseigenschaften. Entsprechende Beschichtungen lösen das Problem der Fließfähigkeit jedoch nicht vollständig. Der positive Effekt der Beschichtung ist unter Reaktionsbedingungen nicht zyklenstabil. Die Beschichtungsmaterialien reagieren zudem mit dem Reaktionsmaterial und bilden ein inertes Nebenprodukt. Dadurch reduziert sich der Anteil an reaktiver Masse und dadurch die Speicherkapazität.

US 9 845 974 B2 offenbart Partikel mit einem inneren Teil und einer äußeren Beschichtung. Der innere Teil besteht aus CaO und die äußere Beschichtung aus hydrophoben Nanopartikeln mit einer Größe von weniger als 1 µm. Die Partikel haben eine mittlere Größe von 1 bis 1000 µm. Ferner wird eine Vorrichtung zur Durchführung eines Absorptionsverfahrens unter Verwendung dieses Teilchens offenbart sowie ein Verfahren zur Herstellung eines solchen Teilchens, umfassend das Mischen von CaO mit hydrophoben Nanopartikeln und das Mischen mit ausreichender Energie, um Teilchen zu erhalten, die mit den hydrophoben Nanopartikeln beschichtetes CaO umfassen.

Alternative Lösungsvorschläge, um die Fließfähigkeit der Speichermaterialien in entsprechenden Reaktoren oder Solaranlagen zu verbessern besteht darin, die Speichermaterialien nicht in Pulverform, sondern als Granulate oder Pellets einzusetzen. Für thermochemische Wärmespeicher ist diese Aufbereitung jedoch ungeeignet, da bei den üblicherweise eingesetzten Materialien während der stattfindenden chemischen Reaktion eine Volumenänderung eintritt. Nach wenigen Reaktionszyklen, in denen die Pellets oder Granulate Energie gespeichert und wieder abgegeben haben, kommt es zum Auseinanderbrechen der Pellets beziehungsweise Granulate. Durch weitere Reaktionen erhält man so wieder ein Pulver mit verminderter Fließfähigkeit. Die Prozessführung entsprechender Wärmespeicherreaktoren wird durch die Partikelgrößenreduktion erheblich beeinträchtigt.

Die Zugabe von Additiven, die zusätzlich zum eigentlichen reaktiven Speichermaterial anwesend sind um die Fließfähigkeit des Ausgangsmaterials zu optimieren, führt zu einer starken Verringerung des reaktiven Anteils des anwesenden Ausgangsmaterials und somit zu einer Reduktion der Speicherdichte. Auch eine dichte Verkapselung des Speichermaterials mittels einer Hülle führt zu einer Reduktion des reaktiven Anteils. Zudem kann der Reaktionspartner, der für die chemische Reaktion notwendig ist, nicht zum Kern, welcher das reaktive Speichermaterial umfasst, vordingen, sodass die Effizienz deutlich herabgesenkt ist.

Es besteht daher an Bedarf für thermochemische Energiespeichermaterialien, die die im Stand der Technik bekannten Nachteile vermeiden.

In einer ersten Ausführungsform wird die der vorliegenden Erfindung zugrunde liegende Aufgabe gelöst durch ein Verfahren wie es im unabhängigen Anspruch 1 beschrieben ist sowie ein Wärmespeichermaterial gemäß Anspruch 8. Ein weiterer Gegenstand der vorliegenden Erfindung ist die Verwendung gemäß Anspruch 9. Das erfindungsgemäße Verfahren zur Herstellung eines thermochemischen Energiespeichermaterials umfasst daher die folgenden Schritte:
- Bereitstellen eines Granulats mit einem Durchmesser im Bereich von 500 µm bis 10 mm, welches ein reaktives Speichermaterial umfasst,
- in Kontakt bringen des Granulats mit einem Additiv, wobei das Additiv in Form von Nanopartikeln an der Oberfläche des Granulats haftet und
- Wärmebehandlung des derart nanobeschichteten Granulats, wodurch eine Hüllschicht durch eine Reaktion zwischen dem Speichermaterial, an der Oberfläche des Granulats und dem Additiv als eigene chemische Phase entsteht, wobei das Additiv ausgewählt ist aus pyrogenen Materialien.

Überraschenderweise hat sich gezeigt, dass ein Energiespeichermaterial in Form eines Granulats bereitgestellt werden kann, welches mit einer Nanobeschichtung stabilisiert wird. Diese Nanobeschichtung sorgt einerseits dafür, dass das Granulat in seiner Form stabil bleibt und während des Einsatzes als Energiespeicher nicht zu einem Pulver zerfällt. Gleichzeitig ist die Nanobeschichtung derart ausgestaltet, dass notwendige Reaktionspartner, die mit dem reaktiven Speichermaterial reagieren müssen, ungehindert zu diesem vordingen können, sodass keine Verringerung des reaktiven Anteils und somit der Speicherdichte zu beobachten ist. Bei kompakten Granulaten sind die Volumenausdehnung aufgrund der Reaktion und die dadurch auf das Agglomerat wirkenden Kräfte enorm. Ohne die erfindungsgemäße Beschichtung zerfallen Granulate mit zunehmender Zyklenzahl in immer kleinere Partikelfraktionen bis sich wieder die kleinste Partikelgröße und damit ein Pulver einstellt.

Das erfindungsgemäße Verfahren umfasst zunächst das Bereitstellen eines Granulats, welches das reaktive Speichermaterial umfasst. Vorzugsweise besteht das Granulat aus dem reaktiven Speichermaterial. Dieses Granulat wird dann mit einem Additiv in Kontakt gebracht, wobei das Additiv anschließend in Form von Nanopartikeln an der Oberfläche des Granulats haftet. Durch eine Wärmebehandlung des derart nanobeschichteten Granulats entsteht eine Hüllschicht um das Granulat, wobei die Hüllschicht dadurch entsteht, dass eine Reaktion zwischen dem Speichermaterial an der Oberfläche des Granulats und dem Additiv erfolgt, sodass eine eigene chemische Phase entsteht. Das Additiv an sich, welches ausgewählt ist aus pyrogenen Materialien, lässt sich somit als Nanopartikel beschrieben. Das nanostrukturierte Additiv kann erfindungsgemäß unaufbereitet eingesetzt werden, so dass der verwendete Feststoff noch größere Agglomerate von Einzelpartikeln mit Durchmesser von bis zu 2 mm aufweist. Während des Inkontaktbringens, welches vorzugsweise in einem Mischvorgang besteht, dispergieren die Nanopartikel und bilden eine Monolage oder wenige Lagen auf dem Granulat aus. Diese Lagen bestehen dann aus Nanopartikeln. Der nanoskalige Charakter geht durch die Ausbildung der Hüllschicht verloren.

Die Wärmebehandlung erfolgt bei einem Temperaturbereich, der auf das Speichermaterial/Reaktionssystem zugeschnitten ist. Entsprechend kann die Wärmebehandlung bei Temperaturen im Bereich von -20 °C bis 1600 °C erfolgen. Vorzugsweise liegt der Temperaturbereich von 50 °C bis 1200 °C, insbesondere von 100 °C bis 1000 °C, bevorzugt von 300 °C bis 800 °C.

In einer bevorzugten Ausführungsform erfolgt die Wärmebehandlung, durch welche die erfindungsgemäße Hüllschicht entsteht, dadurch, dass das mit Nanopartikeln beschichtete Granulat in einem Ofen gebrannt wird. Alternativ und bevorzugt erfolgt die Wärmebehandlung dadurch, dass das mit den Nanopartikeln versehene Granulat in der Endanwendung, beispielsweise als thermochemischer Energiespeicher oder in der Rauchgasreinigung oder weiteren möglichen Einsatzgebieten, eingesetzt wird. Auch hier erfolgt automatisch eine Wärmebehandlung, wodurch die Hüllschicht entsteht, sodass ein stabiles Granulat erhalten wird, welches nicht zu einem Pulver zerfällt.

Wird im Vorliegenden von einem Granulat gesprochen, so sind hierunter auch Pellets, Kugeln oder andere Agglomerate zu verstehen. Vorzugsweise liegt der Durchmesser des reaktiven Speichermaterials, also des ursprünglich zur Verfügung gestellten Granulats, im Bereich von 500 µm bis 10 mm, vorzugsweise 600 µm bis 8 mm, insbesondere von 1 mm bis 6 mm, bevorzugt von 1,5 mm oder von 2 mm bis 5 mm.

Der Durchmesser des Granulats ist vor und nach der Beschichtung im Wesentlichen unverändert.

Das Additiv liegt vor der Wärmebehandlung in Form von Nanopartikeln an der Oberfläche des Granulats vor. Dabei bedeckt das Additiv das Granulat zumindest teilweise, jedoch vorzugsweise vollständig auf der Oberfläche. Auch bei einer vollständigen Bedeckung liegt jedoch vorzugsweise nur eine Monolage an Nanopartikeln auf der Oberfläche des Granulats vor. Dies kann dadurch eingestellt werden, dass die Menge an Additiv im Hinblick auf die Menge des Granulats entsprechend gewählt wird.

Da auch bei entsprechender Berechnung des Mengenverhältnisses zwischen Granulat und Additiv nicht sicher eingestellt werden kann, dass lediglich eine Monolage an Nanopartikeln auf dem Granulat vorliegt, ist es erfindungsgemäß selbstverständlich auch möglich, dass das Additiv in Form von wenigen Lagen von Nanopartikeln auf der Oberfläche des reaktiven Speichermaterials in Form des Granulats vorliegt. Jedoch ist die Dicke der nanopartikulären Beschichtung so gering, dass sie keinen wesentlichen Einfluss auf den Durchmesser des Granulats vor beziehungsweise nach der Beschichtung hat.

In einer bevorzugten Ausführungsform beträgt die Dicke der Hüllschicht maximal 10% des Durchmessers der ursprünglich eingesetzten Partikel des Granulats. Vorzugsweise beträgt die Dicke der Hüllschicht wenige Nanometer. Dabei ist die Hüllschicht erfindungsgemäß die Schicht, die sich durch Reaktion des nanopartikulären Additivs mit dem reaktiven Speichermaterial ausbildet. Üblicherweise ist die Dicke der Hüllschicht wenige Nanometer dick, sodass vorzugsweise die Dicke der Hüllschicht 50 nm oder weniger, vorzugsweise 20 nm oder weniger, insbesondere 10 nm oder weniger beträgt. Vorzugsweise ist die Schichtdicke der Hüllschicht 1 nm, insbesondere 2 nm oder mehr, vorzugsweise 3, 4, 5 oder 6 nm oder mehr. Entsprechend dünne Hüllschichten ermöglichen die Stabilisierung des Granulats. Aufgrund der Volumenexpansion infolge der Reaktion kommt es nicht zum Zerfall des Speichermaterials zu Primärpartikeln. Weiterhin ist die Hüllschicht ausreichend dünn, um den Anteil an reaktivem Material in Bezug auf die Gesamtmenge an Wärmespeichermaterial nicht zu verringern. Gleichzeitig kann der Reaktionspartner mehr oder weniger ungehindert zum reaktiven Material gelangen, sodass die chemische Reaktion, durch welche die Energiespeicherung stattfindet, ohne Probleme stattfinden kann.

Das reaktive Speichermaterial ist beispielsweise ausgewählt aus Zeoliten, CaO, K₂O, BaO, LiO₂, NaO₂, KO₂, Li₂O₂, Na₂O₂, K₂O₂, Mg(OH)₂, MgSO4 x 7H₂O, Ca(OH)₂, CaCO₃, CaSO₄, 2H₂O, CaCl₂ ^{x} 2H₂O, BaCO₃, BaO₂, CuSO₄ ^{x} 5H₂O, Mg(NH₂)₂ oder deren Mischungen aus diesen. Besonders bevorzugt ist es CaO, welches in einer Gas-Feststoffreaktion mit Wasserdampf zu Ca(OH)₂ reagiert.

Die Materialien können in einer Gas-Feststoff-Reaktion oder Flüssig-Feststoff-Reaktion, insbesondere in einer Gas-Feststoff-Reaktion als thermochemische Energiespeicher eingesetzt. So kann beispielsweise Kalziumoxid in Anwesenheit von Wasser (Wasserdampf) zu Kalziumhydroxid reagieren. Diese stark exotherme Reaktion von gebranntem Kalk und Wasser, das in der Gasphase als Reaktand hinzugefügt wird, zu Kalziumhydroxid wird bereits seit Ende der 70er Jahre untersucht, da es eine Reaktionsenthalpie von 109 kJ/Mol aufweist. Daneben ist jedoch auch die Reaktion von Kalziumoxid mit Kohlenstoffdioxid zu Kalziumcarbonat denkbar. Bariumoxid oder Kaliumoxid können mit Sauerstoff zu den entsprechenden höheren Oxiden reagieren. Auch Reaktionen mit Kohlenmonoxid, Chlor, Brom oder Ammoniak mit den genannten reaktiven Speichermaterialien sind möglich.

Die Verwendungen von gebranntem Kalk (CaO) als reaktives Speichermaterial ist besonders bevorzugt. Dieses kann einerseits günstig in großen Mengen bereitgestellt werden. Auch die Pellettierung oder Granulierung ist einfach möglich. Zudem ist die Reaktionsenthalpie hier groß, sodass große Mengen an Energie gespeichert werden können. Hinzu kommt, dass es sich um ein ungiftiges Material handelt.

Als Additiv werden pyrogene Materialien, wie beispielsweise Aerosil, MOX (Mischoxide, wie beispielsweise Indiumzinnoxid (ITO), Nickeltitangelb, Lithium-Nickel-Mangan-Cobalt-Oxide) oder Aluminiumoxid eingesetzt. Durch die Beschichtung mit den Nanomaterialien wird das Speichermaterial nur an dessen Randschicht modifiziert. Die Partikeleigenschaften, insbesondere die Reaktivität im Inneren des Granulats bleiben erhalten, sodass möglicherweise gar keine oder nur minimale Umsatzverluste im Vergleich zu einem unmodifizierten Material auftreten. Aluminiumoxide, welche beispielsweise unter dem Namen Alu C von der Fa. Evonik vertrieben werden, sind kostengünstig zu erhalten und bilden die gewünschte Hüllstruktur mit den Granulaten aus. Sie sind daher besonders bevorzugt.

Aufgrund der Wärmebehandlung kommt es zur Ausbildung der Hüllschicht, welche eine eigene Phase darstellt. Diese hat, wie bereits ausgeführt, kaum Einfluss auf den Durchmesser und kein beziehungswiese kaum Einfluss auf den Energieumsatz. In einer Schüttung weist das erfindungsgemäß stabilisierte technisch optimierte Energiespeichermaterial jedoch ein besseres Transportverhalten im Vergleich zu einer Primärpartikelschüttung auf, auch wenn diese wie im Stand der Technik beschrieben modifiziert ist.

Das erfindungsgemäße Verfahren ermöglicht daher die Bereitstellung eines Energiespeichermaterials, welches eine höhere volumetrische Speicherdichte im Vergleich zu alternativen Ansätzen zur Verfügung stellt. Teilweise ist auch eine höhere gravimetrische Speicherdichte möglich. Die Schüttung des erfindungsgemäßen Energiespeichermaterials weist eine deutlich geringere Porosität auf als eine Schüttung von Primärpartikeln.

Zudem ermöglicht die erfindungsgemäße Hüllschicht Freiheitsgrade, wie Form, Geometrie und Abmessung des Granulats zur Optimierung des technisch optimierten Partikelkerns, da die Stabilität des Granulats nicht genau auf dessen Zusammensetzung beruht. Es ergibt sich die Möglichkeit mit der vorliegenden Erfindung ein definiertes Verhältnis zwischen mit Additiv benetzter Oberfläche und Kernmasse herzustellen. Insbesondere durch diesen Vorteil ist eine Übertragung auf weitere Anwendungsfelder abseits der thermochemischen Energiespeicherung denkbar, wie diverse Prozesse in der chemischen Industrie, Rauchgasreinigung, Chemical Looping, Katalysatoren, CO₂ Reduktion aus Abgasen, Schadstofffilter oder Trocknungsprozesse.

Die Einsatzstoffe, nämlich das Energiespeichermaterial sowie das Additiv, sind umweltverträglich und ein Recycling als Sekundärrohstoff für die Baustoffindustrie oder andere geeignete Anwendungen ist grundsätzlich denkbar. Zudem ist das Herstellungsverfahren einfach und die Einsatzstoffe kostengünstig.

Das Inkontaktbringen zwischen dem granulären Speichermaterial sowie dem Additiv kann unmittelbar nur zwischen diesen beiden erfolgen. Es ist jedoch auch möglich, dass dies in Anwesenheit eines Bindemittels erfolgt. Bei dem Bindemittel kann es sich um eine Flüssigkeit handeln, mit welcher das Additiv als Schlämmung vorliegt, sodass das Inkontaktbringen verbessert wird. Als Bindemittel kann beispielsweise eine Flüssigkeit ausgewählt aus Wasser, Paraffinöl, Alkohol, Ether oder Mischungen aus diesen eingesetzt werden. Über die Viskosität und Polarität der Flüssigkeit kann Einfluss auf die Schichtdicke der sich ausbildenden Hülle genommen werden. Vorzugsweise handelt es sich bei dem Bindemittel um Wasser.

In einer besonders bevorzugten Ausführungsform wird das Granulat, insbesondere CaO bzw. Ca(OH)₂, mit Wasser als Bindemittel und dem Additiv, also Nanopartikeln, gemischt und anschließend verwendet. Bei der ersten thermochemischen Zyklierung im Temperaturbereich bis maximal 600 °C entsteht die anpassungsfähige Hüllschicht. Dafür sind in der Regel jedoch bereits hydrothermale Bedingungenausreichend.

Im nachfolgenden Ausführungsbeispiel wird die vorliegende Erfindung in nicht limitierender Weise erläutert.

### Beispiel:

Als reaktives Speichermaterial wurde Kalkhydratgranulat H90 (von der Fa. Rheinkalk, Deutschland) verwendet. Dieses wies einen Durchmesser von 1,4 bis 2 mm auf.

Als Additiv wurde Aluminiumoxid (Alu C von der Fa. Evonik) verwendet. Der Gewichtsanteil an Additiv betrug 10 Gew.-% bezogen auf die Menge an reaktivem Speichermaterial.

Unter Zugabe von Wasser als Bindemittel wurden die beiden in einem Intensivmischer miteinander in Kontakt gebracht. Hierfür wurden diese über eine Dauer von 2 Minuten bei Raumtemperatur miteinander vermischt, wodurch eine Beschichtung von Nanopartikeln auf dem Granulat entstand.

Die so erhaltenen mit Nanopartikeln beschichteten Granulate wurden dann als thermochemische Energiespeichermaterialien in einen entsprechenden Reaktor eingesetzt, wodurch eine kontinuierliche Hüllschicht entstand.

## Patentansprüche

1. Verfahren zur Herstellung eines thermochemischen Energiespeichermaterials umfassend:
- Bereitstellen eines Granulats mit einem Durchmesser im Bereich von 500 µm bis 10 mm, welches ein reaktives Speichermaterial umfasst,
- in Kontakt bringen des Granulats mit einem Additiv, wobei das Additiv in Form von Nanopartikeln an der Oberfläche des Granulats haftet, und
- Wärmebehandlung des derart nanobeschichteten Granulats, wodurch eine Hüllschicht durch eine Reaktion zwischen dem Speichermaterial, an der Oberfläche des Granulats und dem Additiv als eigene chemische Phase entsteht, ,
wobei das Additiv ausgewählt ist aus pyrogenen Materialien.

2. Verfahren nach Anspruch 1, **dadurch gekennzeichnet, dass** das die pyrogenen Materialien ausgewählt sind aus Aerosil, Aluminiumoxid oder Mischoxiden (MOX), wobei die Mischoxide vorzugsweise ausgewählt sind aus Indiumzinnoxid (ITO), Nickeltitangelb, Lithium-Nickel-Mangan-Cobalt-Oxid.

3. Verfahren nach Anspruch 1 oder 2, **dadurch gekennzeichnet, dass** die Wärmebehandlung durch Brennen in einem Ofen erfolgt.

4. Verfahren nach Anspruch 1 oder 2, **dadurch gekennzeichnet, dass** die Wärmebehandlung durch Verwendung des nanobeschichteten Granulats in einer Endanwendung, insbesondere als thermochemische Energiespeichermaterialien, erfolgt.

5. Verfahren nach einem der Ansprüche 1 bis 4, **dadurch gekennzeichnet, dass** der Durchmesser des Granulats im Bereich von 600 µm bis 8 mm, insbesondere von 1 mm bis 6 mm, vorzugsweise von 2 mm bis 5 mm liegt.

6. Verfahren nach einem der Ansprüche 1 bis 5, **dadurch gekennzeichnet, dass** das Additiv das Granulat vollständig auf der Oberfläche bedeckt, so dass die Hülle das Speichermaterial vollständig bedeckt.

7. Verfahren nach einem der Ansprüche 1 bis 6, **dadurch gekennzeichnet, dass** das in Kontakt bringen in Anwesenheit eines Bindemittels, insbesondere Wasser, erfolgt.

8. Verfahren nach einem der Ansprüche 1 bis 7, **dadurch gekennzeichnet, dass** die Dicke der Hüllschicht auf 10 % oder weniger des Durchmessers eines Partikels des Granulats des Speichermaterials einstellbar ist.

9. Thermochemisches Wärmespeichermaterial in Form eines Granulats umfassend einen Kern aus einem reaktiven Speichermaterial und eine Hülle, erhalten gemäß dem Verfahren nach zumindest einem der Ansprüche 1 bis 8.

10. Verwendung eines Wärmespeichermaterials gemäß Anspruch 9 als thermochemischer Energiespeicher in einer Gas-Feststoffreaktion.

## Claims

1. A process for producing a thermochemical energy storage material, comprising:
- providing granules having a diameter within a range of from 500 µm to 10 mm and comprising a reactive storage material;
- contacting said granules with an additive, wherein said additive in the form of nanoparticles adheres to the surface of the granules; and
- heat-treating the nanocoated granules obtained, whereby a coating layer is formed by a reaction between the storage material on the surface of the granules and the additive as a chemical phase of its own;
wherein said additive is selected from pyrogenic materials.

2. The process according to claim 1, **characterized in that** said pyrogenic materials are selected from pyrogenic silica, aluminum oxide or mixed oxides (MOX), wherein said mixed oxides are preferably selected from indium tin oxide (ITO), nickel titanium yellow, and lithium nickel manganese cobalt oxide.

3. The process according to claim 1 or 2, **characterized in that** said heat-treating is performed by firing in a furnace.

4. The process according to claim 1 or 2, **characterized in that** said heat-treating is performed by using the nanocoated granules in an end application, especially as a thermochemical energy storage material.

5. The process according to any of claims 1 to 4, **characterized in that** the diameter of the granules is within a range of from 600 µm to 8 mm, especially from 1 mm to 6 mm, preferably from 2 mm to 5 mm.

6. The process according to any of claims 1 to 5, **characterized in that** said additive covers the granules completely on its surface, so that the coating covers the storage material completely.

7. The process according to any of claims 1 to 6, **characterized in that** said contacting is performed in the presence of a binder, especially water.

8. The process according to any of claims 1 to 7, **characterized in that** the thickness of the coating layer can be set to 10% or less of the diameter of a particle of the granules of the storage material.

9. A thermochemical heat storage material in the form of granules, comprising a core consisting of a reactive storage material and a coating obtained by the process according to at least one of claims 1 to 8.

10. Use of a heat storage material according to claim 9 as a thermochemical energy storage in a gas-solid reaction.

## Revendications

1. Procédé pour produire un matériau de stockage d'énergie thermochimique, comprenant les étapes consistant à :
- fournir des granules d'un diamètre compris entre 500 µm et 10 mm, comprenant un matériau de stockage réactif,
- mettre les granules en contact avec un additif, dans lequel ledit additif adhère à la surface des granules sous forme de nanoparticules, et
- traiter thermiquement les granules ainsi nano-revêtus, pour former une couche d'enveloppe par une réaction entre le matériau de stockage à la surface des granules et l'additif en tant que phase chimique distincte,
ledit additif étant choisi parmi les matériaux pyrogènes.

2. Procédé selon la revendication 1, **caractérisé en ce que** lesdits matériaux pyrogènes sont choisis parmi la silice pyrogénée, l'oxyde d'aluminium ou les oxydes mixtes (MOX), où les oxydes mixtes sont de préférence choisis parmi l'oxyde d'indium-étain (ITO), le jaune de nickel-titane et l'oxyde de lithium-nickel-manganèse-cobalt.

3. Procédé selon la revendication 1 ou 2, **caractérisé en ce que** le traitement thermique est effectué par cuisson au four.

4. Procédé selon la revendication 1 ou 2, **caractérisé en ce que** le traitement thermique est effectué en utilisant les granules nano-revêtus dans une application finale, notamment comme matériaux de stockage d'énergie thermochimiques.

5. Procédé selon l'une quelconque des revendications 1 à 4, **caractérisé en ce que** le diamètre des granules est compris entre 600 µm et 8 mm, notamment entre 1 mm et 6 mm, de préférence entre 2 mm et 5 mm.

6. Procédé selon l'une quelconque des revendications 1 à 5, **caractérisé en ce que** ledit additif recouvre entièrement les granulés en surface, de sorte que le revêtement recouvre complètement le matériau de stockage.

7. Procédé selon l'une quelconque des revendications 1 à 6, **caractérisé en ce que** ladite mise en contact est effectuée en présence d'un liant, notamment de l'eau.

8. Procédé selon l'une quelconque des revendications 1 à 7, **caractérisé en ce que** l'épaisseur de la couche de revêtement est ajustable à 10 % ou moins du diamètre d'une particule des granules du matériau de stockage.

9. Matériau de stockage de chaleur thermochimique sous forme de granules, comprenant un noyau en un matériau de stockage réactif et un revêtement obtenu par le procédé selon au moins l'une des revendications 1 à 8.

10. Utilisation d'un matériau de stockage de chaleur selon la revendication 9 comme milieu de stockage d'énergie thermochimique dans une réaction gaz-solide.
